# EUROPÄISCHE PATENTSCHRIFT

(11) **EP 1 014 045 B1**
(45) Veröffentlichungstag und Bekanntmachung des Hinweises auf die Patenterteilung: **26.03.2003**
(21) Anmeldenummer: 99124790.9
(22) Anmeldetag: 14.12.1999
(51) Int. Cl.: G01D 11/28, G01D 13/08, G01P 1/08

(54) **Zeigerinstrument**
Pointer instrument
Instrument à aiguille

(30) Priorität: 22.12.1998 DE 19859339; 10.04.1999 DE 19916221
(43) Veröffentlichungstag der Anmeldung: 28.06.2000
(73) Patentinhaber: Siemens Aktiengesellschaft, 80333 München (DE)
(72) Erfinder: Ludewig, Bernd, 69493 Hirschberg (DE)

(56) Entgegenhaltungen:
- EP-A- 0 811 827
- DE-U- 29 622 834
- US-A- 5 201 277

## Beschreibung

Die Erfindung betrifft ein Zeigerinstrument, insbesondere für ein Fahrzeug, mit einem mittels einer Lichtquelle beleuchtbaren Scheibenzeiger, wobei der Scheibenzeiger insbesondere kreis- oder kreisringförmig ausgeführt ist.

Ein solches Zeigerinstrument, bei dem der Scheibenzeiger um eine unbewegliche Zeigerachse schwenkbar ausgeführt ist und bei dem die Zeigerfahne als Markierung auf dem Scheibenzeiger aufgebracht ist, wird heute vor allem in der Fahrzeugindustrie zunehmend eingesetzt und gehört somit zum Stand der Technik.

Bei einem solchen Zeigerinstrument ist die Zeigerachse drehfest mit dem Zeigerinstrument verbunden und weist einen vergleichsweise großen Durchmesser auf, so dass auf einer Stirnfläche des Scheibenzeigers beispielsweise eine als Flüssigkristallanzeige ausgeführte weitere Anzeige für einen Betrachter gut ablesbar im Zentrum des Zeigerinstrumentes angebracht werden kann.

Es sind weiterhin Ausführungsformen eines solchen Zeigerinstrumentes bekannt, bei denen der beispielsweise ringförmige Scheibenzeiger am Umfang gelagert ist und somit auch die zentrale Zeigerachse entfällt.

Während die flexible Leitung bei konventionellen Zeigerinstrumenten mit einer eine Zeigerfahne auslenkenden Zeigerwelle spiralförmig um die Zeigerwelle geführt wird und dadurch von dieser beim Auslenken des Zeigers auf- bzw. abgewickelt wird, ist dies bei einer der vorstehenden Ausführungsformen nur unzureichend realisierbar.

Dabei erweist sich bei einer am Umfang des Scheibenzeigers verlegten Leitung als nachteilig, dass bei der Auslenkung des Scheibenzeigers eine große Längendifferenz der Leitung ausgeglichen werden muss. Zugleich muss die Übertragung von Rückstellkräften von der Leitung auf den Scheibenzeiger ausgeschlossen werden, so dass zusätzliche Maßnahmen wie beispielsweise eine mehrfache spiralförmige Wicklung vorgesehen werden müssen. Dadurch ist sowohl der Platzbedarf als auch der Herstellungsaufwand relativ groß.

Bei einer Ausführungsform, bei der die Leitung im wesentlichen frei durch den Raum zwischen dem Scheibenzeiger und den darunter liegenden Bauteilen verlegt ist, erweist es sich demgegenüber als nachteilig, dass es dadurch bei einer Schwenkbewegung des Scheibenzeigers leicht zu einer Verklemmung oder Beschädigung kommen kann.

Aus US-A-5 201 277 ist weiter ein Zeigerinstrument mit einem mittels einer Lichtquelle beleuchtbaren Scheibenzeiger bekannt. Aus DE-2 9622834U ist eine flexible Folie mit Leiterbahnen zur Kontaktierung von Leuchtmittel und aus EP-A-811 827 eine Kontaktierungsfolie zur Verbindung eines Leuchtmittels bekannt.

Der Erfindung liegt das Problem zugrunde, ein Zeigerinstrument der eingangs genannten Art so zu gestalten, dass die Leitung einfach und zugleich vor Beschädigungen geschützt angeordnet werden kann.

Dieses Problem wird erfindungsgemäß dadurch gelöst, dass der Scheibenzeiger mit einer flexiblen Leitung verbunden ist, die zumindest in etwa konzentrisch gekrümmt zu dem Scheibenzeiger verläuft und zwei durch eine 180°-Umbiegung verbundene, mit Abstand übereinander verlaufende Schenkel hat, wobei der erste Schenkel derart gegen eine Rückseite des Scheibenzeigers anliegt und der zweite Schenkel derart mit axialem Abstand zu dem Scheibenzeiger an einem rückwärtigen Bauelement des Zeigerinstrumentes fixiert ist dass die Leitung bei einer Schwenkbewegung des Scheibenzeigers auf dessen Rückseite abgerollt wird.

Hierdurch wird die Leitung bei der Schwenkbewegung des Scheibenzeigers auf dessen Rückseite abgerollt, so dass einerseits eine exakte Bewegungsbahn ohne das Risiko einer Beschädigung vorgegeben wird, andererseits der Platzbedarf sehr gering ist. Durch die konzentrische Krümmung der Leitung folgt diese der durch die Schwenkbewegung des Scheibenzeigers vorgegebenen Kreisbahn. Es entstehen daher keine Querkräfte in Richtung der Mitte des Scheibenzeigers, die zu einem Verrutschen der Leitung an der Rückseite des Scheibenzeigers führen könnten. Dabei wird insbesondere der zentrale Bereich sowie der Umfang des Scheibenzeigers durch den Verlauf der Leitung nicht eingeschränkt.

Durch diese Ausführung kann die Leitung problemlos auch bei einem Scheibenzeiger verwendet werden, der an seinem Umfang gelagert ist und daher keine zentrale Achse oder Welle aufweist. Die von der Leitung durch das Umbiegen erzeugten und auf den Scheibenzeiger wirkenden Rückstellkräfte sind dabei gering.

Eine andere besonders vorteilhafte Ausführungsform der Erfindung ist auch dann gegeben, wenn an der Rückseite des Scheibenzeigers ein Absatz angeordnet ist, gegen den die Leitung mit einer zur Mitte des Scheibenzeigers weisenden Seite anliegt.

Dieser Absatz erstreckt sich zumindest entsprechend der maximalen Auslenkung des Scheibenzeigers und verhindert so ein Verrutschen der Leitung zur Mitte hin. Der Absatz kann hierzu als Anschlag ausgeführt und beispielsweise zusätzlich mit einer Schrägfläche versehen sein, die das Anlegen der Leitung gegen die Rückseite des Scheibenzeigers vereinfacht und eine exakte Führung ermöglicht.

Dabei ist eine besonders gut geeignete Weiterbildung der Erfindung dadurch gegeben, dass der Scheibenzeiger eine an seiner Rückseite angeordnete Nut aufweist, in welcher die Leitung anliegt.

Dadurch ist die Leitung gegen Beschädigungen optimal geschützt und behindert ihrerseits nicht die Funktion des Scheibenzeigers. Zugleich ermöglicht diese Weiterbildung eine platzsparende Ausführung, bei der die Leitung in der Nut zurückgesetzt einlegbar ist. Hierzu kann die Nut zusätzliche Einführhilfen, beispielsweise Schrägflächen oder Fasen, aufweisen, wodurch die Führung der Leitung weiter verbessert werden kann.

Eine besonders vorteilhafte Ausführungsform der Erfindung ist auch dadurch gegeben, dass die Leitung eine auf einer Folie aufgebrachte elektrische Leiterbahn ist.

Dadurch weist die Leitung eine lediglich sehr geringe Dicke auf und hat zugleich eine hohe Flexibilität, die in unterschiedlichen Richtungen verschieden ausgeprägt sein kann. Daher können die anderenfalls zur Einhaltung einer exakten Bewegungsbahn erforderlichen Führungselemente weitgehend entfallen. Die Leiterbahn kann beispielsweise auch an einem Ende mit der Lichtquelle unmittelbar kontaktiert sein.

Besonders vorteilhaft ist es dabei auch, wenn die Lichtquelle eine in eine dezentral angeordnete Ausnehmung des Scheibenzeigers eingesetzte Leuchtdiode ist. Hierdurch wird eine extrem flache Bauweise des Scheibenzeigers möglich, wobei die Leuchtdiode lediglich von einer lichtdurchlässigen Zeigerfahne abgedeckt zu werden braucht. Zugleich bleibt der zentrale Bereich des Scheibenzeigers frei von Bauelementen und kann so für weitere Anzeigen optimal genutzt werden.

Eine andere besonders effektive Ausführungsform der Erfindung ist hingegen auch dadurch erreicht, dass die Leitung als Lichtleiter ausgeführt ist. Hierdurch kann das Licht einer im rückwärtigen Bereich des Zeigerinstrumentes angeordneten Lichtquelle in den Lichtleiter eingekoppelt und an der Vorderseite des Scheibenzeigers ausgekoppelt werden. Der Lichtleiter kann dabei auch in eine als Zeigerfahne ausgeführte Lichtauskoppelfläche übergehen, so dass die Anzahl der erforderlichen Bauteile reduziert werden kann, wobei insbesondere an dem Scheibenzeiger keine Lichtquelle vorgesehen werden muss. Die Lichtquelle kann zugleich auch zur Beleuchtung verschiedener Anzeigen in mehrere Lichtleiter einstrahlen.

Besonders sinnvoll ist es auch, wenn das rückwärtige Bauelement eine Leiterplatte ist. Dadurch kann die Leitung unmittelbar kontaktiert bzw. an eine Lichtquelle angeschlossen werden. Dabei vereinfacht beispielsweise ein an sich bekannter Nullkraftstecker die Montage und ermöglicht im Servicefall einen mühelosen Austausch.

Eine andere besonders zweckmäßige Ausgestaltung der Erfindung ist dadurch gegeben, dass der Scheibenzeiger im wesentlichen transparent ausgeführt ist und an seiner Rückseite im Bereich der anlegbaren Leitung einen Abschnitt mit einer verminderten Transmission aufweist.

Hierdurch kann die insbesondere bei einer Auslenkung des Scheibenzeigers gegen die Rückseite des Scheibenzeigers anliegende Leitung von einem Betrachter nicht wahrgenommen werden. Der Abschnitt kann hierzu beispielsweise mit einer Beschichtung oder einer Strukturfläche versehen sein.

Dieser eine verminderte Transmission aufweisende Abschnitt wird bei einer besonders vorteilhaften Weiterbildung der Erfindung dadurch erreicht, dass der Abschnitt als kreisringförmige Ausnehmung ausgeführt ist und somit mühelos in einem gemeinsamen Bearbeitungsschritt mit dem Absatz oder der Nut angebracht werden kann.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines erfindungsgemäßen Zeigerinstrumentes,
- Fig. 2: eine Draufsicht auf das Zeigerinstrument in einer vergrößerten Prinzipdarstellung,
- Fig. 3: eine geschnittene Seitenansicht eines Scheibenzeigers des Zeigerinstrumentes.

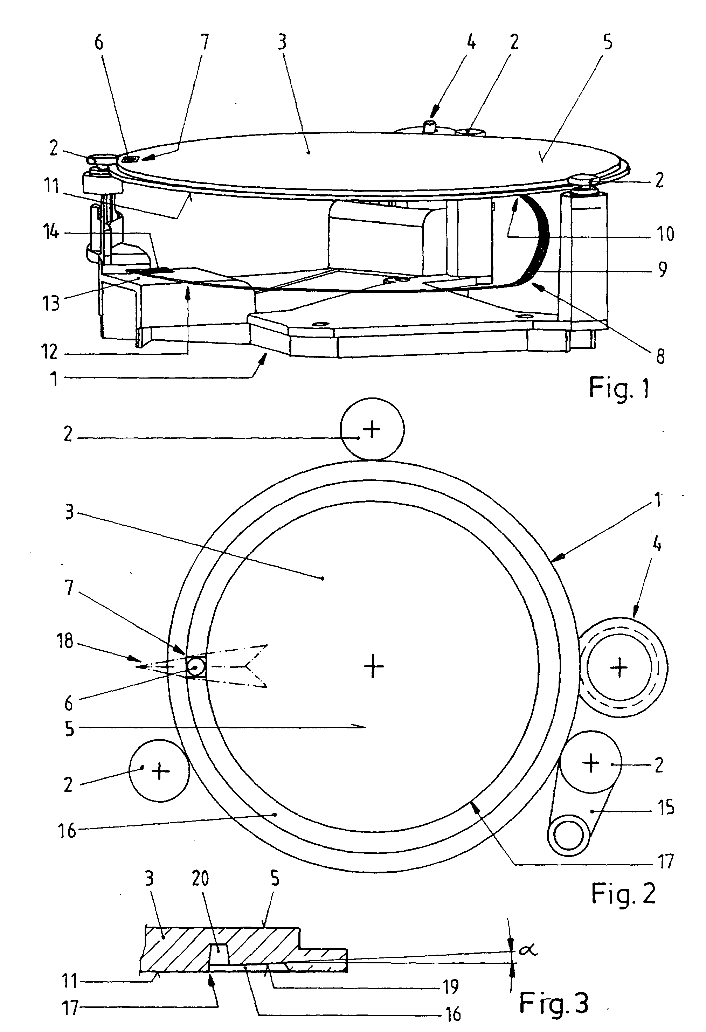

Figur 1 zeigt in einer perspektivischen Darstellung ein beispielsweise in ein Kombinationsinstrument eines Kraftfahrzeuges einbaubares Zeigerinstrument 1. Das Zeigerinstrument 1 hat einen zwischen drei Führungsrollen 2 gelagerten Scheibenzeiger 3, welcher mittels eines Zeigerantriebes 4 verdrehbar ist. Der Zeigerantrieb 4 kann z.B. ein mittels eines Schrittmotors angetriebenes Zahnrad sein, das in am Umfang des Scheibenzeigers 3 angeordnete Zähne zur Übertragung einer Drehbewegung eingreift. Auf einer für einen Betrachter sichtbaren Vorderseite 5 des kreisförmigen Scheibenzeigers 3 ist eine als Leuchtdiode ausgeführte Lichtquelle 6 in eine Ausnehmung 7 eingesetzt. Zur Energieversorgung der Lichtquelle 6 dient eine flexible Leitung 8. Diese als konzentrisch gekrümmte Leiterbahn ausgeführte Leitung 8 hat eine 180°-Umbiegung 9, die einen in der Figur 1 lediglich teilweise sichtbaren, gegen eine Rückseite 11 des Scheibenzeigers 3 anliegenden ersten Schenkel 10 mit einem gegen ein rückwärtiges Bauelement 13 des Zeigerinstrumentes 1 anliegenden und an diesem mittels einer Steckverbindung 14 kontaktierten zweiten Schenkel 12 verbindet.

Figur 2 zeigt das Zeigerinstrument 1 in einer vereinfacht dargestellten Draufsicht. Zu erkennen sind die drei in etwa gleichmäßig am Umfang verteilten Führungsrollen 2, die zur Lagerung des kreisförmigen und im wesentlichen transparenten Scheibenzeigers 3 dienen. Zum Ausgleich von Toleranzen und Wärmedehnungen ist eine der Führungsrollen 2 an einem Schwingarm 15 angeordnet und mittels eines nicht dargestellten Federelementes gegenüber dem Scheibenzeiger 3 vorgespannt. Da Figur 2 lediglich eine Prinzipdarstellung zeigt, unterscheidet sich hier die Anordnung des Zeigerantriebs 4 und der Führungsrollen 2 mit und ohne Schwingarm 15 zueinander etwas von der Darstellung in Figur 1, wobei jedoch die technische Funktion identisch ist.

Weiterhin greift der Zeigerantrieb 4 in den Scheibenzeiger 3 ein. Durch den transparenten Scheibenzeiger 3 ist eine in seiner Rückseite 11 verlaufende, koaxiale Nut 16 zu erkennen, gegen deren Nutengrund die in Figur 1 dargestellte Leitung 8 anliegt und die zur Mitte hin durch einen Absatz 17 begrenzt ist. An der Vorderseite 5 des Scheibenzeigers 3 ist die Ausnehmung 7 für die Lichtquelle 6 angeordnet, die zum Einstrahlen in eine lediglich beispielhaft durch eine gestrichelte Linie dargestellte Zeigerfahne 18 ausgeführt ist.

Den lediglich abschnittsweise dargestellten Scheibenzeiger 3 zeigt Figur 3 in einer geschnittenen Seitenansicht. An der Rückseite 11 des Scheibenzeigers 3 ist die Nut 16 zu erkennen, gegen deren mit dem Winkel a gegenüber dem Scheibenzeiger 3 geneigte Schrägfläche 19 die nicht dargestellte Leitung anlegbar ist. In einem zur Mitte des Scheibenzeigers 3 weisenden Bereich des Absatzes 17 der Nut 16 weist der Scheibenzeiger 3 einen als Vertiefung ausgeführten Abschnitt 20 verminderter Transmission auf. Die Vertiefung verursacht eine Reflexion, so dass die in die Nut 16 eingelegte Leitung durch die Vorderseite 5 des Scheibenzeigers 3 für einen Betrachter unsichtbar ist.

Durch die beschriebene Gestaltung des Zeigerinstrumentes 3 ist eine exakte Führung der Leitung 8 in der Nut 16 möglich. Zugleich ist der Platzbedarf dieser Anordnung ebenso wie durch die Leitung auf den Scheibenzeiger 3 wirkenden Rückstellkräfte gering.

## Patentansprüche

1. Zeigerinstrument, insbesondere für ein Fahrzeug, mit einem mittels einer Lichtquelle beleuchtbaren Scheibenzeiger, wobei der Scheibenzeiger insbesondere kreis- oder kreisringförmig ausgeführt ist, **dadurch gekennzeichnet, dass** der Scheibenzeiger mit einer flexiblen Leitung (8) verbunden ist, die zumindest in etwa konzentrisch gekrümmt zu dem Scheibenzeiger (3) verläuft und zwei durch eine 180°-Umbiegung (9) verbundene, mit Abstand übereinander verlaufende Schenkel (10, 12) hat, wobei der erste Schenkel (10) derart gegen eine Rückseite (11) des Scheibenzeigers (3) anliegt und der zweite Schenkel (12) derart mit axialem Abstand zu dem Scheibenzeiger (3) an einem rückwärtigen Bauelement (13) des Zeigerinstrumentes (1) fixiert ist, dass die Leitung (8) bei einer Schwenkbewegung des Scheibenzeigers (3) auf dessen Rückseite (11) abgerollt wird.

2. Zeigerinstrument nach Anspruch 1, **dadurch gekennzeichnet, dass** an der Rückseite (11) des Scheibenzeigers (3) ein Absatz (17) angeordnet ist, gegen den die Leitung (8) mit einer zur Mitte des Scheibenzeigers (3) weisenden Seite anliegt.

3. Zeigerinstrument nach Anspruch 1 oder 2, **dadurch gekennzeichnet, dass** der Scheibenzeiger (3) eine an seiner Rückseite (11) angeordnete Nut (16) aufweist, in welcher die Leitung (8) anliegt.

4. Zeigerinstrument nach einem der vorhergehenden Ansprüche, **dadurch gekennzeichnet, dass** die Leitung (8) eine auf einer Folie aufgebrachte elektrische Leiterbahn ist.

5. Zeigerinstrument nach einem der vorhergehenden Ansprüche, **dadurch gekennzeichnet, dass** die Lichtquelle (6) eine in eine dezentral angeordnete Ausnehmung (7) des Scheibenzeigers (3) eingesetzte Leuchtdiode ist.

6. Zeigerinstrument nach einem der vorhergehenden Ansprüche, **dadurch gekennzeichnet, dass** die Leitung (8) als Lichtleiter ausgeführt ist.

7. Zeigerinstrument nach einem der vorhergehenden Ansprüche, **dadurch gekennzeichnet, dass** das rückwärtige Bauelement (13) eine Leiterplatte ist.

8. Zeigerinstrument nach einem der vorhergehenden Ansprüche, **dadurch gekennzeichnet, dass** der Scheibenzeiger (3) im wesentlichen transparent ausgeführt ist und an seiner Rückseite (11) im Bereich der anlegbaren Leitung (8) einen Abschnitt (20) mit einer verminderten Transmission aufweist.

9. Zeigerinstrument nach Anspruch 8, **dadurch gekennzeichnet, dass** der Abschnitt (20) als kreisringförmige Ausnehmung ausgeführt ist.

## Claims

1. Pointer instrument, especially for a vehicle, having a disc pointer which can be illuminated by a light source, the disc pointer being designed in particular like a circle or circular ring, **characterized in that** the disc pointer is connected to a flexible lead (8) which runs at least approximately concentrically curved in relation to the disc pointer (3) and has two legs (10, 12) joined by a 180° bend (9) and running at a distance above each other, the first leg (10) resting in such a manner against a rear (11) of the disc pointer (3) and the second leg (12) being fixed in such a manner to a rear component (13) of the pointer instrument (1), with an axial spacing from the disc pointer (3), that the lead (8) is unrolled on the rear (11) of the disc pointer (3) during a pivoting movement thereof.

2. Pointer instrument according to Claim 1, **characterized in that** there is arranged on the rear (11) of the disc pointer (3) a ledge (17), against which the lead (8) rests with one side pointing towards the centre of the disc pointer (3).

3. Pointer instrument according to claim 1 or 2, **characterized in that** the disc pointer (3) has a groove (16) which is arranged on its rear (11) and in which the lead (8) rests.

4. Pointer instrument according to one of the preceding claims, **characterized in that** the lead (8) is an electric conductor track applied to a film.

5. Pointer instrument according to one of the preceding claims, **characterized in that** the light source (6) is a light-emitting diode inserted into a recess (7) arranged off-centre in the disc pointer (3).

6. Pointer instrument according to one of the preceding claims, **characterized in that** the lead (8) is designed as an optical waveguide.

7. Pointer instrument according to one of the preceding claims, **characterized in that** the rear component (13) is a printed circuit board.

8. Pointer instrument according to one of the preceding claims, **characterized in that** the disc pointer (3) is designed to be essentially transparent and, on its rear (11), in the area of the lead (8) which can be placed on it, has a section (20) with a reduced transmission.

9. Pointer instrument according to Claim 8, **characterized in that** the section (20) is designed s an annular recess.

## Revendications

1. Appareil indicateur, notamment pour un véhicule, comprenant un disque indicateur éclairable au moyen d'une source lumineuse, le disque indicateur étant réalisé notamment sous la forme d'un cercle ou d'un anneau circulaire, **caractérisé en ce que** le disque indicateur est relié à un conducteur souple (8) qui s'étend selon une courbure au moins sensiblement concentrique au disque indicateur (3) et comprend deux branches (10, 12) reliées par un cintrage (9) de 180° et s'étendant l'une au-dessus de l'autre avec un écartement donné, la première branche (10) s'appuyant de telle manière contre une face arrière (11) du disque indicateur (3) et la deuxième branche (12) étant fixée de telle manière, avec un écartement axial par rapport au disque indicateur, sur un composant (13) situé à l'arrière de l'appareil indicateur (1), que le conducteur (8), lors d'un mouvement de rotation du disque indicateur (3), se déroule sur la face arrière (11) de celui-ci.

2. Appareil indicateur selon la revendication 1, **caractérisé en ce que** sur la face arrière (11) du disque indicateur (3) est disposée une saillie (17) contre laquelle s'appuie le conducteur (8) avec un côté tourné vers le centre du disque indicateur (3).

3. Appareil indicateur selon la revendication 1 ou 2, **caractérisé en ce que** le disque indicateur (3) présente, sur sa face arrière (11), une rainure (16) dans laquelle s'appuie le conducteur (8).

4. Appareil indicateur selon l'une des revendications précédentes, **caractérisé en ce que** le conducteur (8) est un ruban conducteur électrique appliqué sur une feuille.

5. Appareil indicateur selon l'une des revendications précédentes, **caractérisé en ce que** la source lumineuse (6) est une diode luminescente logée dans un évidement (7) disposé de manière décentrée, du disque indicateur (3).

6. Appareil indicateur selon l'une des revendications précédentes, **caractérisé en ce que** le conducteur (8) est réalisée sous la forme d'un conducteur de lumière.

7. Appareil indicateur selon l'une des revendications précédentes, **caractérisé en ce que** le composant (13) situé à l'arrière est une carte de circuit imprimé.

8. Appareil indicateur selon l'une des revendications précédentes, **caractérisé en ce que** le disque indicateur (3) est réalisé de manière essentiellement transparente et présente sur sa face arrière (11), dans la zone où s'appuie le conducteur (8), une partie (20) avec une transmission réduite.

9. Appareil indicateur selon la revendication 8, **caractérisé en ce que** la partie (20) est réalisée en tant qu'évidement en forme d'anneau circulaire.
